(19) Europäisches Patentamt
European Patent Office
Office européen des brevets

(11) Veröffentlichungsnummer: **0 546 494 A1**

# (12) EUROPÄISCHE PATENTANMELDUNG

(21) Anmeldenummer: **92120885.6**

(22) Anmeldetag: **08.12.92**

(51) Int. Cl.5: **C25D 13/10**, C09D 5/44, C09D 7/06

(30) Priorität: **11.12.91 DE 4140753**

(43) Veröffentlichungstag der Anmeldung:
**16.06.93 Patentblatt 93/24**

(84) Benannte Vertragsstaaten:
**AT BE DE ES FR GB GR IT NL PT SE**

(71) Anmelder: **Herberts Gesellschaft mit beschränkter Haftung**
**Christbusch 25**
**W-5600 Wuppertal 2(DE)**

(72) Erfinder: **Klein, Klausjoerg**
**Richard-Strauss-Allee 33**
**W-5600 Wuppertal 2(DE)**
Erfinder: **Hirtl, Johann**
**Mastweg 179**
**W-5600 Wuppertal 12(DE)**
Erfinder: **Katzmann, Heinz-Peter**
**Zedernweg 22**
**W-5600 Wuppertal 1(DE)**

(74) Vertreter: **Türk, Gille, Hrabal, Leifert**
**Brucknerstrasse 20**
**W-4000 Düsseldorf 13 (DE)**

## (54) Kathodisch abscheidbare Elektrotauchlackbäder mit Additiven zur Oberflächenverbesserung, sowie die Verwendung letzterer für Beschichtungsverfahren.

(57) Kathodisch abscheidbare Bindemittel enthaltende wäßrige Elektrotauchlackbäder enthaltend als Additive zur Oberflächenverbesserung, insbesondere als Antikratermittel
0,1 bis 3 Gew.-% eines oder mehrerer
(Meth)acrylcopolymerer mit einer Aminzahl von 15 - 150 und einer OH-Zahl von 15 - 450,
zusammen mit
0,1 bis 2 Gew.-% eines oder mehrerer Polyester mit $\beta$-Hydroxyalkylestergruppen, mit einer Säurezahl von 0 bis 3 und einem Gewichtsmittel der Molmasse von 1000 bis 10000,
und/oder zusammen mit
0,1 bis 5 Gew.-% eines oder mehrerer Homo- oder Copolymerer eines oder mehrerer Alkylvinylether mit 1 - 5 Kohlenstoffatomen im Alkylrest, mit einem Gewichtsmittel der Molmasse von 500 bis 10000,
wobei sich die Gewichtsprozente auf den Festkörper der Bindemittel beziehen und Verfahren zum Beschichten elektrisch leitfähiger Substrate.

EP 0 546 494 A1

Die Erfindung betrifft das Gebiet von Additiven zur Oberflächenverbesserung bei der kathodischen Elektrotauchlackierung (KTL), insbesondere den Zusatz von Antikratermitteln.

Die kathodische Elektrotauchlackierung (KTL) ist ein vor allem zum Grundieren von Automobilkarossen häufig angewandtes Verfahren, bei dem wasserverdünnbare, kationische Gruppen tragende Kunstharze mit Hilfe von Gleichstrom auf elektrisch leitende Körper abgeschieden werden. Dieses Prinzip ist in der Literatur beschrieben und in der Praxis weit verbreitet. Dabei wird ein Werkstück mit elektrisch leitender Oberfläche aus Metall oder elektrisch leitendem Kunststoff in ein wäßriges Elektrotauchbad gebracht, als Kathode an eine Gleichstromquelle angeschlossen und dann wird durch den fließenden Strom der Lack auf der Oberfläche koaguliert (EP-B-0 066 859, EP-A-0 004 090, DE-A-32 15 891). Das Elektrotauchbad besteht aus einer wäßrigen Dispersion, z. B. Suspension oder Emulsion oder aus einer wäßrigen Lösung von einem oder mehreren Bindemitteln, die beispielsweise durch partielle Salzbildung mit organischen oder anorganischen Neutralisationsmitteln wasserdispergierbar gemacht wurden, sowie gegebenenfalls aus darin dispergierten Pigmenten, Füllstoffen, Additiven, Lösemitteln und sonstigen Hilfsmitteln.

Mit Lackmaterialien dieser Zusammensetzung sollen nach der Abscheidung und dem Vernetzen des entstandenen Films glatte Oberflächen erzeugt werden. Diese Oberflächen decken Störungen aus dem Untergrund gleichmäßig ab. Sie dienen häufig zur Erzeugung eines Untergrundes für die Folgeschichten, die einen qualitativ hochwertigen Decklack erzeugen sollen. In der Praxis treten jedoch in dem eingebrannten KTL-Film häufig Oberflächenstörungen, insbesondere Krater, oder ungleichmäßige Oberflächen auf. Die Ursachen dieser Beschichtungsstörungen können in den eingesetzten Elektrotauchlack-Materialien liegen, häufig zeigt sich jedoch, daß diese Störungen aus in das Elektrotauchlackbad eingeschleppten Verunreinigungen stammen. Beispiele für Verunreinigungen aus dem Lackmaterial sind Gelteilchen aus der Bindemittelherstellung, geschädigte Harzpartikel aus der Pigmentpastenherstellung, Verunreinigungen der Pigmente sowie Fremdsubstanzen aus Geräten, die zur Herstellung der entsprechenden Materialien dienen. Nachträglich eingeschleppte Fremdsubstanzen sind z. B. Tiefziehfette, Korrosionsschutzfette, Nahtabdichtungsmaterialien sowie Substanzen aus der Vorbehandlung.

Eine weitere Klasse von Verunreinigungen sind solche, die nach dem Abscheiden des Elektrotauchlacküberzuges aus der Luft auf dem noch nicht vernetzten Lackfilm abgelagert werden, beispielsweise fluor- oder silikonhaltige Aerosole sowie Schmiermittel aus den Transportsystemen, die zur Bewegung der zu beschichtenden Teile notwendig sind.

Diese Stoffe können vor dem Einbrennen auf den Lackfilm gelangen und verursachen dann bei dem Einbrennen beispielsweise durch Unverträglichkeit Oberflächenstörungen, wie z. B. Krater. Eine Beeinträchtigung durch diese Materialien ist nicht vorherzusehen, sondern muß durch Experiment ermittelt werden.

Diese Oberflächenstörungen verlangen aufwendige Nacharbeiten, um eine glatte Oberfläche der Nachfolgeschichten zu erreichen. Um deshalb eine kontinuierliche Produktion sicherzustellen, ist es notwendig, diese Art von Oberflächenstörungen zu vermeiden. Da eine Verhinderung der vielfältigen Ursachen von Kratern nur schwer zu erreichen ist, wird im allgemeinen versucht, die Kraterbildung durch Additive zu vermeiden.

Als Additive zur Vermeidung von Kratern sind z. B. Silikonöle oder fluorhaltige organische Substanzen bekannt. Diese unterdrücken zwar in der angewandten Schicht die Kraterbildung, führen aber häufig in Nachfolgeschichten zu starken Oberflächenstörungen. Außerdem ist festzustellen, daß die Nachfolgeschichten schlecht auf solchen Untergründen haften. Deshalb sind diese Additive für KTL-Schichten nicht geeignet.

Deshalb wurde versucht, andere nicht silikonhaltige Additive zu finden, um diese häufigen Oberflächenstörungen zu vermeiden. Es werden in der US-A-4 810 535 als Zusatzmittel zu KTL-Systemen Polyoxyalkylenpolyamin-Umsetzungsprodukte mit Epoxidharzen beschrieben. Damit sollen Krater vermieden werden. In der EP-A-0 324 951 werden Polyoxyalkylenpolyamine als Zusatz zu KTL-Bäder beschrieben, um störungsfreie Filmoberflächen zu erhalten. In der DE-A-38 30 626 werden als Zusatzmittel zu KTL-Bädern modifizierte Acrylate beschrieben, die neutralisierbar oder nicht neutralisierbar dem Lackmaterial zugesetzt werden können. Auch in diesem Fall sollen Oberflächenstörungen verschiedener Art vermieden werden. In der EP-A-0 301 293 werden kathodische Elektrotauchlackbäder beschrieben, die als Additiv Homo- oder Copolymere eines Alkylvinylethers enthalten. In der EP-A-0 422 533 werden kationische (Meth)acrylcopolymere als Antikratermittel für KTL-Bäder beschrieben. Alle diese Materialien zeigen die Eigenschaft, daß sie in größeren Mengen eingesetzt werden müssen, um eine Antikraterwirkung zu erzielen. Dabei ergibt sich die Schwierigkeit, daß die Haftung zu Nachfolgeschichten, z. B. Füller oder Polyvinylchlorid-Materialien, deutlich verschlechtert werden.

Unabhängig von der Ursache der Krater ist festzustellen, daß der Wirkungsgrad der bekannten Antikratermittel für KTL-Systeme in der Praxis nicht ausreicht. Auch erhöhte Mengen dieser Additive führen nicht zu einer völligen Beseitigung der Krater. Deshalb müssen häufig die Substrate nachgearbeitet werden,

z. B. durch Schleifen oder Nachlackieren.

In der noch nicht offengelegten DE-Patentanmeldung 40 18 876 werden Gemische von Polyvinylethern mit einer gewichtsmittleren Molmasse von 500

- 10000 zusammen mit Polyestern einer gewichtsmittleren Molmasse von 1000
- 10000 und einer Säurezahl von maximal 3, welche

$\beta$-Hydroxyalkylestergruppen enthalten und bevorzugt mit dem KTL-Bindemittel nicht völlig verträglich sind, als Antikratermittel beschrieben.

Da Krater durch verschiedenste Ursachen bewirkt werden und in der Praxis oft unterschiedliche Kraterursachen zugleich auftreten oder im Laufe des Lackierverfahrens weitere unterschiedliche kraterverursachende Substanzen hinzukommen, besteht ein Bedürfnis nach weiteren Antikratermitteln, die in geringen Mengen eingesetzt werden und verschiedenste Kraterursachen beseitigen können.

Es bestand daher die Aufgabe, Antikratermittel bereitzustellen, die bei niedrig wählbarer Dosierung unterschiedlichste Kraterursachen bekämpfen können, ohne daß Haftungsprobleme zu Folgeschichten entstehen.

Es hat sich gezeigt, daß diese Aufgabe gelöst werden kann durch Einsatz von A) einem oder mehreren (Meth)-acrylcopolymeren mit einer Aminzahl von 15-150 mg KOH/g sowie einer OH-Zahl von 15-450 mg KOH/g, die jeweils zusammen mit B) einem oder mehreren Polyestern mit einem Gewichtsmittel der Molmasse von 1000-10000, mit einer Säurezahl von maximal 3, welche $\beta$-Hydroxyalkylestergruppen enthalten und bevorzugt mit dem KTL-Bindemittel nicht völlig verträglich sind, und/oder zusammen mit C) einem oder mehreren Polyvinylethern mit einem Gewichtsmittel der Molmasse von 500-10000 eingesetzt werden. Erfindungsgemäß ist es möglich die Komponenten A) + B), A) + C) oder alle drei Komponenten A) + B) + C) miteinander kombiniert einem KTL-Bad zuzusetzen.

Bevorzugt werden sowohl bei der Verwendung von zwei Komponenten, als auch bei Verwendung von drei Komponenten, das (Meth)acrylcopolymere in einer Menge von 0,1 - 3 % Massenanteil, der Polyester in einer Menge von 0,1 bis 2 %, bevorzugt 0,1 bis 1 % Massenanteil und der Polyvinylether in einer Menge von 0,1 - 5 % Massenanteil bezogen auf die Masse der KTL-Bindemittel, einschließlich möglichem Vernetzer verwendet. Die Massenanteile (Gewichte) der (Meth)acrylcopolymeren zu den Polyestern und die Massenanteile der (Meth)acrylcopolymeren zu den Homo- oder Copolymeren des Vinylethers liegen jeweils bevorzugt im Verhältnis 1:10 bis 10:1, jeweils bezogen auf den Harzfestkörper, im Falle der Dreier-Kombination von Polyvinylether mit Polyester und (Meth)acrylcopolymeren stehen die Massenanteile bevorzugt im Verhältnis von 1:1:10 bis 1:10:1 bzw. 10:1:1 zueinander.

Polyester, wie sie erfindungsgemäß verwendet werden können, mit einer Säurezahl von maximal 3, die im wesentlichen frei von sauren Gruppen sind und $\beta$-Hydroxyestergruppen enthalten, werden in EP-A-0 012 463, EP-A-0 066 859 und DE-A-34 36 345 als Vernetzer beschrieben.

Im Rahmen der Erfindung hat es sich gezeigt, daß im wesentlichen säurefreie Polyester mit mindestens 2 end- oder seitenständigen gesättigten oder ungesättigten $\beta$-Hydroxyalkylestergruppen pro Molekül und einem Gewichtsmittel der Molmasse von 1000 - 10000 eine Wirkung als oberflächenverbessernde Mittel haben, wenn sie in KTL-Systemen in einer Menge ≦ 2 Gewichts-% bezogen auf das KTL-Bindemittel plus gegebenenfalls vorhandenem Vernetzer (jeweils berechnet auf den Harzfestkörper) eingesetzt werden und zwar im Gemisch mit (Meth)acrylcopolymeren mit einer OH-Zahl von 15-450 und einer Aminzahl von 15-150 und einer zahlenmittleren Molmasse von 1000 - 500000 in einer Menge ≦ 3 Gew.-% bezogen auf das KTL-Bindemittel plus gegebenenfalls vorhandenem Vernetzer (jeweils bezogen auf den Harzfestkörper) oder, daß (Meth)acrylcopolymere mit einer OH-Zahl von 15-450 und einer Aminzahl von 15-150 und einer zahlenmittleren Molmasse von 1000 - 500000 in einer Menge ≦ 3 Gew.-% bezogen auf das KTL-Bindemittel plus gegebenenfalls vorhandenem Vernetzer (jeweils bezogen auf den Harzfestkörper) eine Wirkung als oberflächenverbessernde Mittel haben, wenn sie in KTL-Systemen eingesetzt werden und zwar im Gemisch mit Homo-oder Copolymeren von Alkylvinyläthern mit einem Alkylrest von 1-5 C-Atomen in einer Menge ≦ 5 Gew.-% (ebenfalls bezogen auf das KTL-Bindemittel plus gegebenenfalls vorhandenem Venetzer, jeweils berechnet auf den Harzfestkörper) oder, daß eine Dreierkombination dieser Substanzen eine Wirkung als oberflächenverbessernde Mittel hat, wenn sie in KTL-Systemen in den schon vorstehend genannten Gew.-%-Bereichen bezogen auf das KTL-Bindemittel plus gegebenenfalls vorhandenem Vernetzer (jeweils berechnet auf den Harzfestkörper) eingesetzt wird.

Bei der KTL-Abscheidung unter Verwendung eines dieser Gemische entstehen glatte, krater- und störungsfreie Oberflächen, die keine Haftungsstörungen zu Nachfolgeschichten aufweisen. Die erfindungsgemäß eingesetzten Additiv-Gemische zeigen eine unerwartete Wirkung, da jede der drei Einzelkomponenten auch in höherer Menge eingesetzt, nicht zu einer völligen Beseitigung der Oberflächenstörungen führt. Erst im Gemisch des erläuterten (Meth)acrylcopolymeren mit dem erläuterten Polyester oder dem erläuterten Polyvinylether oder aller dreier Substanzen werden alle Oberflächenstörungen beseitigt.

Bei Einsatz des erfindungsgemäßen Gemisches chemisch unterschiedlicher Antikratermittel tritt somit ein synergistischer Effekt ein, dergestalt, daß im Falle dieses kombinierten Einsatzes trotz Anwendung der Substanzen in nur ungewöhnlich kleinen Mengen eine gute Antikraterwirkung erzielt wird.

Das erfindungsgemäß verwendete Antikratermittel kann in Form des vorgefertigten Gemisches eingesetzt werden, jedoch können auch alle drei Einzelkomponenten in den angegebenen Mengen in Zweier- oder Dreierkombination dem Elektrotauchlackbad zugesetzt werden. Die Reihenfolge des Zusatzes spielt dabei keine Rolle. Da das erfindungsgemäß verwendete Antikratermittel in geringen Mengen eingesetzt wird, treten Nachteile höherer Dosierungen, die sich bei Anwendung von Antikrateradditiven ergeben können, wie z. B. Haftungsstörungen oder ein rauhe Oberfläche, nicht auf.

Erfindungsgemäß werden übliche Elektrotauchlackbäder eingesetzt, die beispielsweise aus einer wäßrigen Lösung oder Dispersion von üblichen kathodisch abscheidbaren selbst- oder fremdvernetzenden Kunstharzen, üblichen Pigmenten und/oder Füllstoffen sowie weiteren lacküblichen Additiven und Hilfsstoffen, bestehen. Die oberflächenverbessernden Mittel können den Elektrotauchlackbädern von vornherein bei der Herstellung, oder aber auch nachträglich unmittelbar vor der Verwendung zur Elektrotauchlackierung, zugesetzt werden. Wie erwähnt, können die drei Einzelkomponenten des erfindungsgemäßen Antikratermittels einzeln oder auch als Gemisch zugesetzt werden.

Die erfindungsgemäß verwendeten Antikratermittel werden in geringer Menge eingesetzt. Dabei kann es in Einzelfällen günstig sein, die Menge des Gemisches oder die Menge der Einzelkomponenten im Experiment innerhalb der angegebenen Grenzen so zu wählen, daß im abgeschiedenen Überzug keine Krater mehr vorhanden sind.

Die Menge der Additive wird so gewählt, daß im abgeschiedenen Überzug keine Krater mehr vorhanden sind. Ist die gewählte Menge zu hoch, so kommt es zu Oberflächenstörungen, wie z. B. negative Beeinflussung der Haftung der Nachfolgeschichten. Ist die Menge zu gering, so reicht die Antikraterwirkung nicht aus. In diesem Fall ist die Menge des eingesetzten Antikratermittels zu erhöhen.

Die im erfindungsgemäßen Antikratermittel verwendeten Polyalkylvinylether sind Polymere von Alkylvinylethern mit einem Alkylrest von 1 bis 5, bevorzugt 2 bis 4 C-Atomen. Es sind Homopolymere oder Polymere aus verschiedenen Alkylvinylethermonomeren. Außerdem können Copolymere mit bis zu 25 % Comonomeranteil eingesetzt werden. Als Comonomere sind olefinisch ungesättigte Monomere geeignet, die mit den Alkylvinylethern copolymerisierbar sind und bevorzugt keine funktionellen, insbesondere keine wasserlöslich machenden Gruppen, enthalten. Es sind beispielsweise Styrol, Alkylacrylate und/oder Alkylmethacrylate, wobei die Alkylreste z. B. Methyl- oder Ethylreste sind. Das Gewichtsmittel der Molmasse der erhaltenen Polymeren und Copolymeren soll zwischen 500 und 10000 liegen. Die verwendeten Polyalkylvinylether weisen in der Seitenkette keine funktionellen Gruppen auf, sie sind nicht wasserlöslich.

Die im erfindungsgemäßen Antikratermittel eingesetzten, im wesentlichen säurefreien Polyester mit seiten- oder endständigen $\beta$-Hydroxyalkylestergruppen sind Ester von aromatischen Polycarbonsäuren, wie beispielsweise Isophthalsäure, Terephthalsäure, Trimellithsäure oder Gemischen davon. Diese werden z. B. mit Ethylenglykol, Neopentylglykol, Trimethylolpropan und/oder Pentaerythrit kondensiert. Die Carboxylgruppen werden dann mit gegebenenfalls substituierten 1,2-Glykolen unter Bildung von $\beta$-Hydroxyalkylverbindungen umgesetzt. Die 1,2-Glykole können mit gesättigten oder ungesättigten Alkyl-, Ether-, Ester- oder Amidgruppen substituiert sein. Weiter ist auch eine Hydroxyalkylesterbildung möglich, in dem die Carboxylgruppen mit substituierten Glycidylverbindungen, wie z. B. Glycidylethern oder Glycidylestern, umgesetzt werden.

Das Produkt enthält bevorzugt mehr als drei $\beta$-Hydroxyalkylestergruppenpro Molekül und hat ein Gewichtsmittel der Molmasse von 1000 bis 10000, bevorzugt von 1500 bis 5000. Die erfindungsgemäß eingesetzten im wesentlichen säurefreien Polyester mit seiten- oder endständigen $\beta$-Hydroxyalkylestergruppen können hergestellt werden, wie beispielsweise in EP-A-0 012 463 beschrieben. Die dort beschriebenen Verbindungen stellen auch Beispiele für erfindungsgemäß einsetzbare Polyester dar.

Die für den erfindungsgemäßen Zweck geeigneten Polyester zeichnen sich dadurch aus, daß sie bevorzugt nur eine begrenzte Mischbarkeit mit KTL-Bindemitteln besitzen. Im Einzelfall kann die Verträglichkeit wie folgt festgestellt werden: Das Bindemittel einschließlich gegebenenfalls vorhandenen Vernetzern wird mit dem Polyester im Gewichtsverhältnis 9:1 gemischt, und mit Butylglykol auf 75 % Festkörper verdünnt. Die Probe muß zunächst zu einer homogenen Mischung führen, die sich jedoch beim Stehenlassen innerhalb von 2 Tagen wieder entmischt. Ist eine vollständige Verträglichkeit (also keine Entmischung innerhalb von 2 Tagen) gegeben, so ist die Antikraterwirkung gering. Ist eine völlige Unverträglichkeit (also keine homogene Mischbarkeit) vorhanden, so kann eine Störung der Nachfolgeschichthaftung auftreten.

Die im erfindungsgemäßen Antikratermittel eingesetzten (Meth)acrylcopolymeren haben eine Aminzahl von 15 - 150 und eine OH-Zahl von 15 - 450. Sie weisen primäre, sekundäre und/oder tertiäre Aminogruppen auf und können beispielsweise aus radikalisch polymerisierbaren Monomeren hergestellt werden. Das

Zahlenmittel der Molmasse (Mn) liegt bevorzugt bei 1000 bis 500000. Bevorzugt werden (Meth)-acrylcopolymere eingesetzt, die eine Viskosität von 0,1 bis 10 Pa.s in 50%iger Lösung in Buthoxyethanol bei 25°C aufweisen und eine Glasübergangstemperatur von -50 bis +150°C haben.

Die (Meth)acrylcopolymeren sind beispielsweise erhältlich durch Copolymerisation von aminogruppenhaltigen Monomeren und hydroxylgruppenhaltigen Monomeren oder aminogruppen- und hydroxylgruppenhaltigen Monomeren mit jeweils Monomeren, die außer einer ungesättigten Doppelbindung keine weiteren reaktiven Gruppen enthalten. Bevorzugt werden entweder 6 bis 40 Gewichtsteile aminogruppenhaltige Monomere und 4 bis 50 Gewichtsteile hydroxylgruppenhaltige Monomere oder 8 bis 60 Gewichtsteile aminogruppen- und hydroxylgruppenhaltige Monomere pro 10 bis 90 Gewichtsteile der Comonomeren ohne weitere reaktive Gruppen eingesetzt. Von letzteren können beispielsweise bis zu 10 Gewichtsteile durch polyungesättigte Monomere ersetzt sein.

Derartige mit Wasser verdünnbare Amino-poly(meth)acrylate können beispielsweise hergestellt werden wie in der DE-A-1546854, DE-A-2057799 oder DE-A-2325177 beschrieben. Als radikalisch polymerisierbare Monomere kommen beispielsweise ethylenisch ungesättigte Monomere in Frage, die für Copolymerisationen geeignet sind, wie beispielsweise durch das Q- und e-Schema nach Alfrey und Price beschrieben (Brandrup und Immergut, Polymere Handbook, 3. Aufl., John Wiley and Sons, New York, 1989).

Das im erfindungsgemäßen Antikratermittel eingesetzte (Meth)acrylcopolymer ist bevorzugt ein nach Neutralisation mit organischen Säuren wasserverdünnbares Poly(meth)acrylatharz mit einer

| | |
|---|---|
| Aminzahl von<br><br>einer Hydroxylzahl von<br><br>einer mittleren Molmasse (Mn) von | 15 bis 150, bevorzugt 40 bis 100 (mgKOH pro g Festharz),<br>15 bis 450, bevorzugt 50 bis 200 (mgKOH pro g Festharz),<br>1000 bis 500000 besonders 3000 bis 100000 gemessen durch Gelpermeationschromatographie, geeicht mit Polystyrol-Fraktionen |
| und einer Viskosität von | 0,1 bis 10 Pa.s,<br>besonders 0,5 bis 5 Pa.s in 50%iger Lösung in Butoxyethanol bei 25°C, |
| und einer Glasübergangstemperatur errechnet aus den Glasübergangstemperaturen der Homopolymerisate von | -50 bis +150°C,<br>besonders -20 bis +50°C. |

Dabei können die geeigneten mittleren Molmassen bzw Viskositäten auch dadurch erhalten werden, daß Harze mit höherer und niedrigerer Viskosität bzw. Molmasse vermischt werden.

Zur Herstellung der (Meth)acrylcopolymeren können beispielsweise Mischungen verschiedener ungesättigter Monomerer verwendet werden, die entweder basische Stickstoffatome enthalten oder in die durch chemische Umsetzungen ein solches basisches Stickstoffatom eingeführt werden kann. So basieren die (Meth)acrylcopolymeren beispielsweise auf jeweils radikalisch polymerisierbaren

a) 6 bis 40 Gewichtsteilen aminogruppenhaltiger Monomerer,

b) 4 bis 50 Gewichtsteilen hydroxylgruppenhaltiger Monomerer und

c) 10 bis 90 Gewichtsteilen weiterer radikalisch polymerisierbarer Monomerer, die außer einer ungesättigten Doppelbindung keine weiteren reaktiven Gruppen enthalten

wobei gegebenenfalls bis zu 10 Gewichtsteile der Komponente c) durch radikalisch polymerisierbare polyungesättigte Monomere ersetzt sind.

Die radikalisch polymerisierbaren aminogruppenhaltigen Monomeren und hydroxylgruppenhaltigen Monomeren müssen nicht als Gemisch vorgelegt werden. Es können auch Monomerarten eingesetzt werden, die sowohl Aminogruppen als auch Hydroxylgruppen gleichzeitig enthalten. Für diesen Fall werden 8 bis 60 Gewichtsteile der aminogruppen- und hydroxylgruppenhaltigen Monomeren und 10 bis 90 Gewichtsteile der radikalisch polymerisierbaren Monomeren, die keine weiteren reaktiven Gruppen enthalten, eingesetzt, wobei gegebenenfalls bis zu 10 Gewichtsteile der letzteren radikalisch polymerisierbare polyungesättigte Monomere sind.

Als radikalisch polymerisierbare aminogruppenhaltige bzw. N-gruppenhaltige Monomere werden beispielsweise Monomere der folgenden allgemeinen Formel eingesetzt:

R-CH = CR'-X-A-N(R")$_2$

worin

R = -R' oder -X-$C_nH_{2n+1}$
R' = -H oder -$C_nH_{2n+1}$
R" = -R', -$C_nH_{2n}OH$ und/oder -$C_nH_{2n}NR_2$
X = -COO-, -CONH- oder -O-

$$A = -C_nH_{2n}- \text{ oder } -C_nH_{2n}-\underset{\displaystyle OH}{\underset{|}{C}H}-CH_2- \quad \text{und}$$

n = 1 bis 8, bevorzugt 1 bis 3

bedeuten.

Beispiele für ungesättigte N-gruppenhaltige Monomere sind N-Dialkyl- oder N-Monoalkyl-aminoalkyl-(meth)acrylate oder die entsprechenden N-Alkanol-Verbindungen wie beispielsweise N-Diethyl-aminoethylmethacrylat oder N-tert-Butylaminoethylacrylat, N-Dialkyl- oder N-Monoalkylaminoalkyl(meth)acrylamid oder die entsprechenden N-Alkanol-Verbindungen wie beispielsweise N-Dimethylaminoethanolacrylamid und/oder Vinylgruppen enthaltende heterocyclische Verbindungen mit einem oder mehreren basischen Stickstoffatomen wie beispielsweise N-Vinylimidazol.

Unter radikalisch polymerisierbaren hydroxylgruppenhaltigen Monomeren werden solche verstanden, die außer einer polymerisierbaren ethylenisch ungesättigten Gruppe noch mindestens eine Hydroxylgruppe an einem C2 bis C20 linearen, verzweigten oder cyclischen Kohlenstoffgerüst enthalten. Es sind hauptsächlich ungesättigte Veresterungsprodukte der allgemeinen Formel

R-CH = CR'-X-B

worin
R, R' und X die oben angegebenen Bedeutungen haben
und B eine lineare oder verzweigte $C_{1-6}$ Alkylgruppe mit 1 bis 3 OH-Gruppen ist.

Besonders geeignet sind (Meth)acrylsäure-hydroxyalkylester wie beispielsweise 2-Hydroxyethylacrylat, 2-Hydroxypropylmethacrylat, Butandiol-1.4-monoacrylat, 2.3-Dihydroxypropylmethacrylat, Pentaerythrit-monomethacrylat, Polypropylenglykol-monoacrylat oder auch Fumarsäuredihydroxyalkylester. Es können jedoch auch N-Hydroxyalkyl(meth)acrylamide oder N-Hydroxyalkylfumarsäure-mono- oder -diamide wie beispielsweise N-Hydroxyethyl-acrylamid oder N-(2-Hydroxypropyl)-methacrylamid eingesetzt werden, sowie auch Reaktionsprodukte von Hydroxyalkyl-(meth)acrylaten mit $\epsilon$-Caprolacton.

Andere hydroxylgruppenhaltige Verbindungen sind Allylalkohol, Monovinylether von Polyalkoholen, besonders Diolen wie der Monovinylether des Ethylenglykols oder Butandiols, sowie hydroxylgruppenhaltige Allylether oder -ester wie 2.3-Dihydroxypropylmonoallylether, Trimethylolpropan-monoallylether oder 2.3-Dihydroxypropansäureallylester. Besonders geeignet sind Hydroxyethyl-, Hydroxypropyl- und/oder Butandiol-1.4-(meth)acrylat.

Unter ethylenisch polyungesättigten Monomeren werden Verbindungen mit mindestens 2 radikalisch polymerisierbaren Doppelbindungen nach der allgemeinen Formel

R-CH = CR'-D-(-CR' = CH-R)$_m$ ,
m = 1 bis 3, bevorzugt ist m = 1

verstanden, wobei außer den weiter oben angegebenen Bedeutungen D das allgemeine tragende chemische Grundgerüst für die reaktive Doppelbindung ist. Beispiele für D sind der o-, m- oder p-Phenylenrest und Reste der Formel -X-Alkyl-X'-, worin Alkyl bevorzugt 2 bis 18 C-Atome aufweist, X und X' gleiche oder verschiedene verbindende Gruppen, z.B. -O-, -CONH-, -COO-, -NHCOO- oder -NH-CO-NH- sind. D kann zum Beispiel ein Benzolring wie im Divinylbenzol sein, der gegebenenfalls auch substituiert sein kann wie p-Methyldivinylbenzol oder o-Nonyldivinylbenzol. Weitere Beispiele für geeignete polyungesättigte Monomere sind Reaktionsprodukte aus Polyalkoholen, besonders Dialkoholen, mit $\alpha,\beta$-ungesättigten Carbonsäu-

ren, wie sie schon definiert sind. Beispiele hierfür sind Ethandioldiacrylat, Glykol- dimethacrylat, 1.4-Butandiol-diacrylat, 1.6-Hexandiol-diacrylat, Neopentylglykol-dimethacrylat, Triethylenglykol-dimethacrylat, Polyglykol-400-diacrylat, Glycerin- dimethacrylat, Trimethylolpropan-triacrylat und/oder Pentaerythrit-diacrylat. Urethan- und amidgruppenhaltige polyfunktionelle Monomere werden hergestellt durch Reaktion von beispielsweise Hexandiisocyanat oder Methacrylsäure-$\beta$-isocyanato-ethylester mit Hydroxyethyl(meth)-acrylat oder (Meth)acrylsäure. Beispiele für anders aufgebaute geeignete Verbindungen sind Allylmethacrylat, Diallylphthalat, Butandioldivinylether, Divinylethylenharnstoff, Divinylpropylenharnstoff, Maleinsäurediallylester, Bis-maleinimide, Glyoxabisacrylamid und/oder das Reaktionsprodukt von Epoxidharz mit (Meth)-acrylsäure oder Fumarsäure-halbestern. Bevorzugt wird der Einsatz von difunktionellen ungesättigten Monomeren wie Butandiol-diacrylat oder Hexandiol-diacrylat. Bei Verwendung von Glycidyl-methacrylat und Methacrylsäure entsteht das entsprechende Glycerin-dimethacrylat automatisch bei der Polymerisation. Die Art und Menge an polyungesättigten Monomeren ist mit den Reaktionsbedingungen (Katalysatoren, Reaktionstemperatur, Lösemittel) sorgfältig abzustimmen, um die gewünschte Viskosität ohne Gelierungen zu erhalten. Es wird der vollständige Einbau der polyungesättigten Monomeren bevorzugt, d.h. das einpolymerisierte Produkt enthält praktisch keine Doppelbindungen mehr.

Die radikalisch polymerisierbaren Monomeren, die außer der ethylenisch ungesättigten Bindung keine weiteren reaktiven Gruppen enthalten, können beispielsweise aus den folgenden ausgewählt werden: Acrylsäure-alkylester, Methacrylsäure-alkylester, Maleinsäure- und/oder Fumarsäure-dialkylester, wobei die Alkylreste aus 1 bis 20 Kohlenstoffatomen bestehen und in linearer oder verzweiger aliphatischer Kette und/oder als cycloaliphatischer und/oder (alkyl)aromatischer Rest angeordnet sind. "Harte" Monomere mit einer hohen Glasübergangstemperatur als Polymere sind beispielsweise Monomere vom Vinylaromatentyp wie Styrol, $\alpha$-substituierte Styrole wie $\alpha$-Methylstyrol, o,m und p-Alkylstyrole wie Vintyltoluol oder p-tert.-Butylstyrol, halogenierte Vinylbenzole wie o- oder p-Chlorstyrol, Methacrylsäureester mit kurzer Kette wie Methylmethacrylat, Ethylmethacrylat, Propylmethacrylat, Butylmethacrylat, Cyclohexylmethacrylat, Isobornylmethacrylat, Dihydrodicyclopentadienyl-methacrylat, (Meth)acrylamid und/oder auch (Meth)acrylnitril. "Weiche" Monomere sind dagegen Acrylsäureester mit einer langen Alkoholkette wie n-Butylacrylat, Isobutylacrylat, tert.-Butylacrylat , 2-Ethylhexylacrylat und/oder Laurylacrylat. Es können auch ungesättigte Ether wie Ethoxyethylmethacrylat oder Tetrahydrofurfurylacrylat eingesetzt werden. Monomere vom Vinylestertyp, vorzugsweise Vinylester $\alpha$-verzeigter Monocarbonsäuren wie dem Versaticsäure-vinylester, können auch einpolymerisiert werden, wenn geeignete Reaktionsbedingungen und Reaktionscomonomere ausgewählt werden.

Die Copolymerisation erfolgt in bekannter Weise durch Lösungspolymerisation unter Zusatz von radikalischen Initiatoren, sowie gegebenenfalls Molekulargewichtsreglern bei Temperaturen von 50 bis 180°C. Sie erfolgt in einer Flüssigkeit, in der sich Monomere und Polymere gemeinsam lösen. Der Gehalt an Monomeren, bzw. Polymeren nach der Auspolymerisation beträgt dabei etwa 50 bis 90 Gew.-% . Es wird eine Lösungspolymerisation in organischen Lösemittel bevorzugt, die mit Wasser verdünnbar sind. Solche Lösemittel sind beispielsweise Ethylenglykol, Methoxyethanol, Butoxyethanol, Diethylenglykol, Triethylenglykol, Diethylenglykol-dimethylether, Propylenglykol, Methoxypropanol, Ethoxypropanol, Dipropylenglykol-monomethylether, Dipropylenglykol-dimethylether, Diacetonalkohol, Ethanol, Isopropanol, sek. Butanol, tert. Butanol, Aceton, Methoxypropanon, Dioxan, Tetrahydrofuran, N-Methylpyrrolidon oder ihren Gemischen.

Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden. Der Initiator wird entweder im Monomerengemisch kalt gelöst oder aus Sicherheitsgründen während des Zulaufs der Monomeren getrennt zudosiert. Als Katalysatoren, die in organischen Lösemitteln löslich sind, werden 0,1 bis 5 Gew.-%, bevorzugt 0,5 bis 3 Gew.-%, bezogen auf die eingesetzte Monomeren-Menge an Peroxiden und/oder Azo-Verbindungen zugesetzt. Als Peroxide werden beispielsweise verwendet Benzoylperoxid oder Di-tert.-butylperoxid, Hydroperoxide wie tert.-Butylhydroperoxid oder Cumolhydroperoxid und Perester wie tert.-Butylperoctoat oder tert.-Butylperbenzoat. Thermisch zerfallende Azo-Verbindungen sind beispielsweise 2.2'-Azo-bis-(2-cyanopropan) oder 1.1'-Azo-bis-cyclohexancarbonitril. Als Initiatoren können auch radikalbildende Verbindungen vom Dibenzyltyp verwendet werden, wie 1.2-Bis(4-methylphenyl)-1.2-dicarbethoxy-1.2-dicyanoethan. Durch den Einsatz von Reglern kann das Molekulargewicht in bekannter Weise herabgesetzt werden. Bevorzugt werden hierzu Mercaptane, halogenhaltige Verbindungen und andere radikalübertragende Substanzen eingesetzt. Besonders bevorzugt sind n-oder tert.-Dodecylmercaptan, Tetrakis-mercaptoacetylpentaerythrit, tert.-Butyl-o-thiokresol, Thiosalicylsäure, Buten-1-ol oder dimeres $\alpha$-Methylstyrol.

Die Herstellung von Amino(meth)acrylatharzen kann auch durch polymeranaloge Umsetzung geschehen. So kann man beispielsweise ein Acrylamidgruppen enthaltendes Copolymeres mit Formaldehyd und einem sekundären Amin und/oder Aminoalkohol umsetzen. Ein besonders bevorzugtes Verfahren wird in der DE-A-34 36 346 beschrieben. Hier werden zunächst epoxidgruppenhaltige monoethylenisch ungesättigte Monomere in das Copolymere einpolymerisiert. Danach wird mit überschüssigem primären und/oder sekundären Monoaminen und/oder Monoaminoalkoholen umgesetzt und anschließend der Aminüberschuß abdestilliert.

Epoxidgruppen enthaltende radikalisch polymerisierbare Monomere sind Mono- und/oder Diglycidylverbindungen von $\alpha,\beta$-ungesättigten Säuren, Säureamiden, Alkoholen oder Aminen wie beispielsweise Glycidylester, $\beta$-Methylglycidylester der (Meth)acrylsäure, der Fumarsäure und/oder Maleinsäure, der Fumarsäure- und/oder Maleinsäuremonoalkylester, sowie Glycidylverbindungen von (Meth)acrylsäureamid, Fumarsäurediamid, Maleinsäurediamid oder Maleinimid und/oder Glycidylether von ungesättigten Alkoholen wie Vinyl- und/oder Allylalkohol. Andere geeignete Verbindungen sind Monoglycidylester von Dicarbonsäuremonoestern mit ungesättigten Alkoholen wie Phthalsäure-allyl-glycidylester. Es können jedoch auch Vinyl- und Allylester von epoxidierten Fettsäuren eingesetzt werden wie 2.3-Epoxy-buttersäure-allylester oder Epoxystearinsäure-allylester. Außerdem eignen sich auch Diolefine, deren eine Doppelbindung epoxidiert worden ist, wie Vinyl-ethylenoxid, 1-Methyl-1-vinylethylenoxid oder 3.4-Epoxy-1-vinyl-cyclohexan. Glycidylacrylat und Glycidylmethacrylat werden für die Copolymerisation bevorzugt. Der Anteil von Epoxidgruppen enthaltenden ungesättigten Monomeren im Copolymerisat beträgt im allgemeinen 8 bis 50 Gew.-%. Die untere Grenze liegt bevorzugt bei 12 Gew.-%, die obere Grenze bei 35 Gew.-%. Die Polymerisation muß vollständig abgelaufen sein, bevor die Umsetzung mit Aminen stattfindet, weil sonst reversible Nebenraktionen an den aktivierten Doppelbindungen der Monomeren mit den sekundären Aminen auftreten.

Als sekundäre Amine für die Umsetzung mit den Epoxidgruppen sind besonders zweckmäßig sekundäre Amine der Formel

R-NH-R'

wobei
R = -H oder -R'
R ' = $C_nH_{2n+1}$, $-C_nH_{2n}OH$ und/oder $-C_nH_{2n}-N=CR_2$
und
n = 1 bis 8, bevorzugt 1 bis 2 betragen.

Folgende Amine können beispielsweise für die Reaktion eingesetzt werden: $C_1$ bis $C_6$-Dialkylamine mit gleichen oder verschiedenen Alkylgruppen im Molekül wie Dimethyl-, Diethyl-, Diisopropyl-, Dibutyl-, Methylethyl-, Methylpropyl-, Methylbutylamin, monocycloaliphatische Amine wie Morpholin, Piperidin, Pyrrolidin, Oxazolidin und/oder Monoalkanolamine wie N-Methylaminoethanol und/oder Dialkanolamine wie Diethanolamin, Diisopropanolamin. Beispiele für primäre Amine oder Aminoalkohole sind $C_1$ bis $C_8$-Alkylamine wie Ethylamin, 2-Ethylhexylamin oder Aminoethanol. In jedem Fall sind $C_1$ bis $C_4$-Alkylgruppen, insbesondere $C_1$ und/oder $C_2$-Alkylgruppen bevorzugt. Besonders bevorzugt sind sekundäre Amine wie Dimethylamin, Diethylamin, Methylethylamin oder N-Methyl-aminoethanol.

Die oben erwähnten primären Amine werden meistens im Gemisch mit sekundären Aminen eingesetzt, weil sonst zu hochviskose Produkte entstehen.

Eine ähnliche Umsetzung kann beispielsweise bevorzugt in äquivalenten Mengen mit Ketiminen von Polyaminen erfolgen, die eine sekundäre Aminogruppe und eine oder mehrere primäre Aminogruppen enthalten wie beispielsweise das Monoketimin aus Methylisobutylketon und Methylaminopropylamin oder das Diketimin aus Methylisobutylketon und Diethylentriamin.

Berücksichtigt man, daß beim Umsetzen mit Amin aus jeder Epoxidgruppe eine sekundäre OH-Gruppe entsteht, so kann es angebracht sein, mindestens eine weitere Hydroxylgruppe pro Molekül, bevorzugt primäre Hydroxylgruppe über andere ungesättigte Monomere einzupolymerisieren. Die Zahl der Epoxidgruppen bestimmt die Zahl der damit zur Umsetzung kommenden Aminogruppen und damit auch die Löslichkeit des Produktes. Es soll mindestens eine Epoxidgruppe pro Molekül vorhanden sein. Oft ist es vorteilhaft, eine erhöhte Hydroxylzahl mit einer niedrigen Aminzahl zu kombinieren.

Erfindungsgemäß wird der funktionalisierte Polyester in Mengen $\leqq$ 2 Gew.-%, bevorzugt $\leqq$ 1 Gew.-%, bezogen auf Festkörper des KTL-Bindemittels einschließlich Vernetzer, eingesetzt. Obwohl eine Reaktion dieses Zusatzmittels mit den KTL-Bindemitteln beim Erhitzen auf höhere Temperaturen nicht auszuschließen ist, dient infolge der geringen Menge dieses Zusatzmittel nicht als Vernetzer. Der Polyalkylvinylether ist nicht funktionalisiert, und reagiert daher beim Einbrennen im allgemeinen nicht mit dem KTL-Bindemittel. Die eingesetzte Menge beträgt $\leqq$ 5 Gew.-%, bevorzugt $\leqq$ 3 Gew.-%, jeweils bezogen auf Festkörper des

KTL-Bindemittels einschließlich Vernetzer. Das (Meth)acrylcopolymere wird in Mengen ≦ 3 Gew.-%, bevorzugt ≦ 1,5 Gew.-%, bezogen auf Festkörper des KTL-Bindemittels einschließlich Vernetzer eingesetzt. Obwohl dieses Zusatzmittel kataphoretisch abgeschieden werden kann und aufgrund seines chemischen Aufbaus in die Vernetzung während des Einbrennens einbezogen werden kann, dient es infolge der geringen Menge dieses Zusatzmittels nicht als Bindemittel.

Die optimale Mischung kann der Fachmann durch Experimente leicht ermitteln. Beispielsweise kann ein Additiv so weit zugesetzt werden, daß eine glatte Oberfläche mit nur wenigen Kratern erhalten wird. Durch Zusatz einer weiteren geringen Menge des anderen oder der anderen Additive werden auch die übrigen Oberflächenstörungen verhindert. Der Film-erhält dann eine glatte, homogene Oberfläche und stört die Nachfolgeschichthaftung nicht.

Die in den Elektrotauchbädern verwendeten Bindemittel enthalten für diesen Zweck übliche basische Harze, mit basischen Gruppen, die beispielsweise Schwefel, Stickstoff oder Phosphor enthalten. Bevorzugt sind stickstoffhaltige basische Gruppen. Diese Gruppen können quaternisiert vorliegen, oder sie werden mit einem üblichen Neutralisationsmittel, wie z. B. organischen Monocarbonsäuren in ionische Gruppen überführt.

Basische Basisharze sind primäre, sekundäre oder tertiäre Aminogruppen enthaltende Harze, deren Aminzahlen z. B. zwischen 20 bis 250 liegen. Das Gewichtsmittel der Molmasse der Basisharze liegt bevorzugt bei 300 bis 10000. Als basische Gruppen treten neben $-NH_2$, $-NRH$, $-NR_2$ und $-NR_3^+$, z. B. auch $-SR_2^+$, $-PR_3^+$ auf, worin R beispielsweise einen Alkylrest mit 1 bis 4 C-Atomen darstellt und die Reste R gleich oder verschieden sein können. Bevorzugt sind stickstoffhaltige basische Gruppen. Als Neutralisationsmittel, die in den wäßrigen Bindemittellösungen bzw. -dispersionen als Anionen fungieren, können die theoretisch bekannten und in der Praxis verwendeten anorganischen und/oder organischen Säuren eingesetzt werden. In der Praxis werden hauptsächlich einwertige Säuren eingesetzt, die eine gute Wasserlöslichkeit bzw. -dispergierbarkeit des Bindemittels bewirken. Bevorzugt werden Ameisensäure, Essigsäure, Milchsäure und Alkylphosphorsäuren eingesetzt.

Basisharze sind z. B. Aminoepoxidharze, Aminoepoxidharze mit endständigen Doppelbindungen, Aminopolyurethanharze, aminogruppenhaltige Polybutadienharze und modifizierte Epoxid-Kohlendioxid-Amin-Umsetzungsprodukte.

Bevorzugt werden Aminoepoxidharze, insbesondere solche auf Basis von Bisphenol A. Diese Basisharze werden in der Literatur, z. B. in der EP-A-0 082 291 und DE-A-32 34 395, beschrieben.

Die Basisharze können selbst- oder fremdvernetzend sein. Als Vernetzungsmittel für fremdvernetzende Basisharze eignen sich übliche Vernetzer, wie beispielsweise Triazinharze, blockierte Isocyanate, Vernetzer mit endständigen Doppelbindungen und zur Michael-Addition mit aktivierten Doppelbindungen fähige Vernetzer mit aktivem Wasserstoff. Diese sind beispielsweise in der EP-A-0 245 786, EP-A-0 004 090, EP-A-0 319 929, DE-A-37 20 956 und in EP-A-0 193 685, US-A-4,810,535 und DE-A-38 30 626 beschrieben. Die verschiedenen Vernetzer können einzeln oder gemischt zusammen mit den Basisharzen eingesetzt werden.

Die erfindungsgemäß eingesetzten Elektrotauchlacke können Pigmente enthalten. Als Pigmente können für die KTL-Abscheidung übliche Pigmente und/oder Füllstoffe eingesetzt werden, wie beispielsweise Ruß, Titandioxid, Eisenoxidrot, Kaolin, Talkum oder Siliciumdioxid. Die Pigmente werden bevorzugt in üblichen Pigmentpastenharzen dispergiert und angerieben. Solche Harze sind beispielsweise in der EP-B-0 183 025 beschrieben. Das Herstellen der Pigmentpasten und das Herstellen der kathodischen Tauchlackbäder sind dem Fachmann geläufig.

Beispielsweise können Pigmente und/oder Füllstoffe in üblichen Anreibebindemitteln dispergiert und dann auf einem geeigneten Aggregat, z. B. einer Perlmühle vermahlen werden. Die so erhaltene Pigmentpaste kann dann in verschiedener Weise den KTL-Bindemitteln zugesetzt werden. Beispielsweise wird sie mit den KTL-Bindemitteln vermischt. Aus diesem Material kann dann durch Verdünnen mit voll entsalztem Wasser das KTL-Überzugsbad hergestellt werden. Ein Beispiel für eine andere Vorgehensweise überführt zuerst die neutralisierten und somit wasserlöslichen Bindemittel oder Bindemittelmischungen in eine Dispersion. Diese wird weiter mit voll entsalztem Wasser verdünnt und danach wird die wäßrige Pigmentpaste zugefügt. Man erhält so ebenfalls ein beschichtungsfähiges KTL-Bad. Die erfindungsgemäß eingesetzten Elektrotauchlackbäder enthalten neben Pigmenten und Füllstoffen auch die genannten Neutralisationsmittel; sie können zusätzlich für KTL-Bäder übliche Lösemittel und/oder weitere lackübliche Additive oder Hilfsstoffe, wie z. B. Entschäumer oder Katalysatoren, enthalten.

Wie erwähnt, können die erfindungsgemäß eingesetzten Antikrateradditive entweder einzeln oder gemeinsam in die KTL-Bäder eingebracht werden. Hierzu können sie beispielsweise in der Bindemittelmischung vor oder nach dem Neutralisieren dispergiert werden und gemeinsam mit dem Bindemittel in die Dispersionsphase überführt werden. Ein Beispiel für eine andere Verfahrensweise liegt darin, daß nach

Überführung der Bindemittel in die Wasserphase die Additive einzeln oder gemeinsam z. B. mit einem Hilfsmittel, wie z. B. einem Teil der dispergierbaren neutralisierten Harze oder dem neutralisierten Pastenharz oder einem geeigneten Lösemittel oder auch in mit Säure neutralisierter und mit Wasser verdünnter Form der Dispersion zugeführt werden. Nach gründlicher Homogenisation sind die Additive stabil eingearbeitet.

Eine weitere Möglichkeit besteht darin, die Antikrateradditive in die Pigmentpaste einzuarbeiten. Das geschieht vorteilhafterweise vor dem Vermahlen der Pigmentpaste, um so sicherzustellen, daß die Additive homogen in der Pigmentpaste verteilt werden. Die so erhaltenen Pasten sind stabil und zeigen nach Zufügen zu dem Elektrotauchlacküberzugsbad die gewünschten Eigenschaften.

Es ist prinzipiell möglich, die zwei bzw. drei Additive gemeinsam zuzusetzen oder auch getrennt. Zusätzlich ist es möglich, zu beschichtungsfertigen KTL-Bädern die Additive nachträglich zuzusetzen. Sie müssen dafür nur in eine wasserverdünnbare Form überführt werden, wie z. B. durch Lösemittel, wasserdispergierbare Emulgatoren, lösliche Bindemittel lösliche Pastenharze oder wie schon zur Neutralisation der Basisharze verwendete Neutralisationsmittel. Diese Vorgehensweise ist besonders dann geeignet, wenn es sich herausgestellt hat, daß beim Arbeiten mit einem bereits vorhandenen Beschichtungsbad Oberflächenstörungen auftreten. Nach dem Zusatz des erfindungsgemäßen Antikratermittels werden diese Störungen dann beseitigt.

Aus den erfindungsgemäß mit Antikratermittel versehenen Elektrotauchlackbädern können unter üblichen Bedingungen verschiedene Substrate beschichtet werden. Diese weisen nach dem Einbrennen eine glatte, kraterfreie Oberfläche auf. Durch die erfindungsgemäßen Antikrateradditive werden sonstige Lackeigenschaften, wie z. B. Korrosionsschutz, Steinschlag, Nachfolgeschichthaftung, nicht beeinflußt. Die erfindungsgemäßen Antikratermittel eignen sich somit insbesondere auf dem Kraftfahrzeugsektor, beispielsweise zur Grundierung von Kraftfahrzeugkarosserien oder Kraftfahrzeugkarosserieteilen, mit nachfolgenden Mehrschicht-Lackaufbau. So können die die erfindungsgemäßen Antikratermittel enthaltenden Elektrotauchlackschichten mit üblichen Füllern überlackiert werden. Beispiele für solche Füller sind den DE-A-33 37 394, 33 37 395, 38 05 629, 41 25 459, 41 34 301 zu entnehmen.

Die folgenden Beispiele dienen zur Erläuterung der Erfindung. Alle Prozentangaben und Teile beziehen sich, sofern nicht anders angegeben, auf das Gewicht. Der Festkörper wird analog DIN 53182 bei 150 °C bestimmt.

<u>Beispiel 1:</u>

Herstellung eines Bindemittels

Gemäß EP-A-0 012 463 werden 391 g Diethanolamin, 189 g 3-(N,N-Dimethylamino)-propylamin und 1147 g eines Adduktes aus 2 mol Hexandiamin-1,6 und 4 mol Glycidylester der Versaticsäure (Cardura® E 10 von Shell) zu 5273 g Bisphenol A Epoxidharz (Epoxidäquivalentgewicht ca. 475) in 3000 g Ethoxypropanol gegeben. Das Reaktionsgemisch wird 4 Stunden unter Rühren bei 85 °C bis 90 °C und dann 1 Stunde bei 120 °C gehalten. Anschließend wird mit Ethoxypropanol auf einen Festkörper von 60 % verdünnt.

<u>Beispiel 2:</u>

Herstellung eines Bindemittels (Vernetzers)

Zu 431 g einer Lösung (75 % in Ethylacetat) eines Umsetzungsproduktes aus 3 mol Toluylendiisocyanat mit 1 mol Trimethylolpropan (Desmodur L) werden bei 70 °C langsam unter Rühren 160 g Caprolactam zugefügt. Die Reaktionsmischung wird danach bei 70 °C gehalten, bis der NCO-Gehalt praktisch auf Null gesunken ist. Dann wird 2-Butoxyethanol (204 g) zugegeben und das Ethylacetat über eine Kolonne bis zu einem Festkörper von 70 % abdestilliert.

Herstellung von KTL-Dispersionen

<u>Beispiel 3a:</u>

1155 g eines Harzes nach Beispiel 1 und 425 g nach Beispiel 2 werden gemischt und dann im Vakuum auf ca. 85 % Festkörper abdestilliert. Dazu werden in der Wärme 45 mmol/100 g Festkörper Ameisensäure (50 %) gegeben und danach mit vollentsalztem Wasser auf ca. 30 % Festkörper verdünnt.

Beispiel 3b:

Es wird genauso wie in Beispiel 3a verfahren, nur werden zu den Bindemitteln 6,6 g der Antikratermittelkomponente nach Beispiel 5 gegeben.

Beispiel 3c:

Es wird wie in Beispiel 3a verfahren, nur werden den Harzen 13,2 g eines handelsüblichen Polyethylvinylethers ($M_w$ 1000 - 10000) zugesetzt.

Beispiel 3d:

Es wird wie in Beispiel 3a verfahren, nur werden 33 g der wäßrigen Lösung gemäß Beispiel 6a zugesetzt.

Beispiel 3e:

Es wird wie in Beispiel 3a verfahren, nur werden 33 g der wäßrigen Lösung gemäß Beispiel 6c zugesetzt.

Beispiel 3f:

Es wird wie in Beispiel 3b verfahren, nur werden 33 g der wäßrigen Lösung gemäß Beispiel 6a zugesetzt.

Beispiel 3g:

Es wird wie in Beispiel 3c verfahren, nur werden 33 g der wäßrigen Lösung gemäß Beispiel 6a zugesetzt.

Beispiel 3h:

Es wird wie in Beispiel 3a verfahren, nur werden zu den Harzen 6,6 g der Antikratermittelkomponente nach Beispiel 5 und 13,2 g eines handelsüblichen Polyethylvinylethers ($M_w$ 1000-10000) zugesetzt. Der erhaltenen KTL-Dispersion werden weiterhin 33 g der wäßrigen Lösung gemäß Beispiel 6a zugesetzt.

Beispiel 3i:

Es wird wie in Beispiel 3b verfahren, nur werden anstelle von 6,6 g 29,7 g der Antikratermittelkomponente nach Beispiel 5 verwendet.

Beispiel 3k:

Es wird wie in Beispiel 3c verfahren, nur werden anstelle von 13,2 g 29,7 g des handelsüblichen Polyethylvinylethers ($M_w$ 1000-10000) verwendet.

Beispiel 4:

Herstellung einer Pigmentpaste

Zu 188 g eines Pastenharzes nach EP-B-0 183 025, Beispiel 5 (80 %), werden unter einem schnellaufenden Rührer 55 g Ameisensäure (50 %) und 485 g vollentsalztes Wasser gegeben. Dazu werden 30 g Ruß, 10 g pyrogene Kieselsäure, 30 g Dibutylzinnoxidpulver, 30 g Bleisilikat und 500 g Titandioxid gegeben. Mit ca. 200 g vollentsalztem Wasser wird auf ca. 48 % Festkörper eingestellt und auf einer Perlmühle vermahlen. Es entsteht eine stabile Pigmentpaste.

Beispiel 5:

Herstellung eines $\beta$-Hydroxyestergruppen enthaltenden Polyesters als Antikratermittelkomponente

768 g Trimellithsäureanhydrid und 2000 g eines Glycidylesters einer verzweigten, tertiären $C_{10}$-Monocarbonsäure (Cardura E10®) werden vorsichtig unter Rühren auf 190 °C erhitzt, wobei ab 90 °C eine exotherme Reaktion beginnt. Das Reaktionsgut wird auf 140 °C gekühlt und mit 2,75 g N,N-Dimethylbenzylamin versetzt. Das Reaktionsgut wird auf 145 °C gehalten, bis eine Säurezahl unter 3 mg KOH/g erreicht wird. Wenn nötig, wird eine berechnete Menge Cardura E10® zusätzlich zugegeben. Das Umsetzungsprodukt wird mit 2-Butoxyethanol auf 80 % Festkörper verdünnt.

Herstellung der (Meth)acrylcopolymeren als Antikratermittelkomponente

Beispiel 6a:

725 g Butoxyethanol werden unter Inertgas auf 110 °C unter Einschalten eines Rückflußkühlers erwärmt. Innerhalb von 3 Stunden wird eine Mischung aus 192 g Hydroxyethylacrylat, 137 g Butandiolmonoacrylat, 228 g Glycidylmethacrylat, 364 g 2-Ethylhexylacrylat, 439 g Butylmethacrylat, 438 g Methylmethacrylat, 90 g Styrol und 44 g Azo-bis-isobutyronitril zugegeben. Danach wird 1 Stunde bei 110 °C gehalten, 6 g Azo-bis-isobutyronitril zugegeben und dieser Vorgang nach einer weiteren Stunde wiederholt. Nach 3 Stunden 110 °C wird ein Festkörpergehalt von 72,2 Gew.% und nach Verdünnen auf 60 Gew.% mit Butoxyethanol eine Viskosität von 2,14 Pa.s bei 25 °C gemessen. Nach Abkühlen auf 50 °C werden ein Gemisch von 129 g Diethylamin und 201 g Isopropanol schnell zugegeben (1,10 mol Amin auf 1,00 mol Epoxid). Nach 30 min wird auf 65 °C erwärmt, dann 1 Stunde gehalten, anschließend auf 105 °C aufgeheizt und dann 3 Stunden gehalten. Nach Abkühlen auf 80 °C wird unter Vakuum Isopropanol und Aminüberschuß sorgfältig abdestilliert. Einstellen des Festkörpergehaltes mit Butoxyethanol auf 78 Gew.%.

Man erhält ein Harz mit einem Zahlenmittel der Molekularmasse von 11000 (gelpermeationschromatographisch, Polystyrolstandard).

| Endwerte: | | |
|---|---|---|
| Hydroxylzahl | 115,2 | mg KOH pro g Festharz |
| Festkörpergehalt | 78,7 | Gew.% (30 min 150 °C) |
| Aminzahl | 45 | mg KOH pro g Festharz |
| Viskosität | 3,44 | Pa.s (nach Verdünnen auf 60 Gew.% mit Butoxyethanol) |

Die Harzlösung wird mit Ameisensäure neutralisiert (Neutralisationsgrad 50 %) und mit deionisiertem Wasser auf einen Festkörpergehalt von 30 Gew.% verdünnt.

Beispiel 6b:

725 g Butoxyethanol werden unter Inertgas auf 110 °C unter Einschalten eines Rückflußkühlers erwärmt. Innerhalb von 3 Stunden wird eine Mischung aus 20,7 g Butandioldiacrylat, 192 g Hydroxyethylacrylat, 137 g Butandiolmonoacrylat, 251 g Glycidylmethacrylat, 364 g 2-Ethylhexylacrylat, 439 g Butylmethacrylat, 438 g Methylmethacrylat, 90 g Styrol und 44 g Azo-bis-isobutyronitril zugegeben. Danach wird 1 Stunde bei 110 °C gehalten, 6 g Azo-bis-isobutyronitril zugegeben und dieser Vorgang nach einer weiteren Stunde wiederholt. Nach 3 Stunden 110 °C wird ein Festkörpergehalt von 71,2 Gew.% (30 min 180 °C) und nach Verdünnen auf 50 Gew.% mit Butoxyethanol eine Viskosität von 2650 mPa.s bei 25 °C gemessen. Nach Abkühlen auf 50 °C werden ein Gemisch von 142 g Diethylamin und Isopropanol schnell zugegeben (1,10 mol Amin auf 1,00 mol Epoxid). Nach 30 min wird auf 65 °C erwärmt, dann 1 Stunde gehalten, anschließend auf 105 °C aufgeheizt und dann 3 Stunden gehalten. Nach Abkühlen auf 80 °C wird unter Vakuum Isopropanol und Aminüberschuß sorgfältig abdestilliert.

| Endwerte: | | |
|---|---|---|
| Hydroxylzahl | 116,4 | mg KOH pro g Festharz |
| Festkörpergehalt | 77,2 | Gew.% (30 min 180 °C) |
| Aminzahl | 46 | mg KOH pro g Festharz |
| Viskosität | 4,2 | Pa.s (nach Verdünnen auf 50 Gew.% mit Butoxyethanol) |

Die Harzlösung wird mit Ameisensäure neutralisiert (Neutralisationsgrad 50 %) und mit deionisiertem Wasser auf einen Festkörpergehalt von 30 Gew.% verdünnt.

Beispiel 6c:

328 g Butoxyethanol werden auf 85 °C erhitzt. Dann wird eine Mischung aus 300 g N,N-Dimethylaminoethylmethacrylat, 220 g Hydroxyethylacrylat, 350 g Butylacrylat, 130 g Styrol, 20 g Azobisisobutyronitril und 100 g Butoxyethanol innerhalb von 5 Stunden gleichmäßig zugegeben. Danach wird noch 2 Stunden bei 90 °C gehalten. Man erhält ein Harz mit einer Aminzahl von 107,0 mg KOH pro g Festharz und einer Hydroxylzahl von 106,2 mg KOH pro g Festharz. Nach Neutralisation mit Ameisensäure (Neutralisationsgrad 50 %) wird mit deionisiertem Wasser auf einen Festkörpergehalt von 30 Gew.% verdünnt.

In den folgenden Beispielen wird die Herstellung von KTL-Bädern und deren Anwendung beschrieben.

Beispiel 7a - k:

Zu 1700 g einer Dispersion nach den Beispielen 3a - k werden unter gutem Rühren 600 g einer Pigmentpaste nach Beispiel 4 gegeben. Dazu wird weiter mit 1700 g vollentsalztem Wasser verdünnt. Zu den Bädern werden kraterverursachende Substanzen (siehe nachstehende Tabellen) gegeben und gut homogenisiert. Aus diesen KTL-Bädern werden übliche zinkphosphatierte Stahlbleche beschichtet (Schichtdicke ca. 20 µm) und bei 170 °C für 30 min eingebrannt. Es wird die Oberfläche beurteilt und die Haftung von Polyvinylchlorid (PVC)-Materialien auf der Oberfläche (siehe nachstehende Tabellen).

Tabelle 1

Zusatz von 4 g ASTM-Öl Nr. 1 (Handelsprodukt der Fuchs-Mineralölwerke GmbH, Mannheim) als kraterverursachendes Mittel:

| Bad Nr. | 7a | 7b | 7i | 7f | 7g | 7h |
|---|---|---|---|---|---|---|
| | Vergleich | | | Erfindung | | |
| Bewertung | -/+ | -/+ | -/- | jeweils +/+ | | |

-/- Oberfläche verkratert, PVC-Haftung gestört

-/+ Oberfläche verkratert, PVC-Haftung i. O.

+/- Oberfläche kraterfrei, PVC-Haftung gestört

+/+ Oberfläche kraterfrei, PVC-Haftung i. O.

Tabelle 2

Zusatz von 4 g (fest) eines styrol- bzw. vinyltoluolmodifizierten Alkydharzes als 10%ige Lösung in Xylol/Butoxyethanol 1:1, Vialkyd AV 462 der Vianova Kunstharz AG, Graz:

| Bad Nr. | 7a | 7b | 7c | 7i | 7k | 7d | 7e | 7f | 7g | 7h |
|---|---|---|---|---|---|---|---|---|---|---|
| | Vergleich | | | | | Erfindung | | | | |
| Bewertung | -/+ | -/+ | -/+ | -/- | -/+ | jeweils +/+ | | | | |

Tabelle 3

Zusatz von 4 g Anticorrit 15 N-68 der Fuchs-Mineralölwerke GmbH, Mannheim

| Bad Nr. | 7a (Vergleich) | 7h (Erfindung) |
|---|---|---|
| Bewertung | -/+ | +/+ |

Tabelle 4

Zusatz einer Mischung der kraterverursachenden Mittel nach Tabelle 1 und 2

| Bad Nr. | 7b | 7c | 7i | 7f | 7g | 7h |
|---|---|---|---|---|---|---|
| | Vergleich | | | Erfindung | | |
| Bewertung | -/+ | -/+ | -/- | jeweils +/+ | | |

Tabelle 5

Zusatz einer Mischung der kraterverursachenden Mittel nach Tabelle 1, 2 und 3

| Bad Nr. | 7a | 7i | 7h |
|---|---|---|---|
| | Vergleich | | Erfindung |
| Bewertung | -/+ | -/- | +/+ |

Die Korrosionsschutzergebnisse der verschiedenen Ansätze sind vergleichbar und ergeben gute Resultate. Die PVC-Materialien sind übliche Unterbodenschutz-Materialien der Fa. Dr. A. Stankiewicz GmbH, Celle und Teroson GmbH, Heidelberg; sie werden in 3 mm Schicht aufgerakelt, 10 min bei 140 °C eingebrannt und 1 Stunde später wird nach Anschneiden die Haftung zwischen Grundierung und PVC geprüft.

**Patentansprüche**

**1.** Kathodisch abscheidbare Bindemittel enthaltende wäßrige Elektrotauchlackbäder enthaltend als Additive zur Oberflächenverbesserung
0,1 bis 3 Gew.-% eines oder mehrerer
(Meth)acrylcopolymerer mit einer Aminzahl von 15 - 150 und einer OH-Zahl von 15 - 450,
zusammen mit
0,1 bis 2 Gew.-% eines oder mehrerer Polyester mit $\beta$-Hydroxyalkylestergruppen, mit einer Säurezahl von 0 bis 3 und einem Gewichtsmittel der Molmasse von 1000 bis 10000,
und/oder zusammen mit
0,1 bis 5 Gew.-% eines oder mehrerer Homo- oder Copolymerer eines oder mehrerer Alkylvinylether mit 1 - 5 Kohlenstoffatomen im Alkylrest, mit einem Gewichtsmittel der Molmasse von 500 bis 10000, wobei sich die Gewichtsprozente auf den Festkörper der Bindemittel beziehen.

**2.** Elektrotauchlackbäder nach Anspruch 1, dadurch gekennzeichnet, daß die Polyester mit $\beta$-Hydroxyalkylestergruppen so gewählt sind, daß sie mit den im Elektrotauchlackbad enthaltenen Bindemitteln nur begrenzt mischbar sind.

**3.** Verfahren zum Beschichten elektrisch leitfähiger Substrate, durch Eintauchen des Substrats als Kathode in ein kathodisch abscheidbare Bindemittel enthaltendes wäßriges Elektrotauchlackbad, kathodische Abscheidung eines Lackfilms auf dem Substrat, Entnahme des Substrats aus dem Elektrotauchlackbad und Einbrennen des Lackfilms, dadurch gekennzeichnet, daß man ein wäßriges Elektrotauchlackbad verwendet, dem als Additive zur Oberflächenverbesserung
0,1 bis 3 Gew.-% eines oder mehrerer (Meth)acrylcopolymerer mit einer Aminzahl von 15 - 150 und einer OH-Zahl von 15 - 450,
zusammen mit
0,1 bis 2 Gew.-% eines oder mehrerer Polyester mit
$\beta$-Hydroxyalkylestergruppen, mit einer Säurezahl von 0 bis 3 und einem Gewichtsmittel der Molmasse

von 1000 bis 10000, und/oder zusammen mit 0,1 bis 5 Gew.-% eines oder mehrerer Homo- oder Copolymerer eines oder mehrerer Alkylvinylether mit 1 bis 5 Kohlenstoffatomen im Alkylrest, mit einem Gewichtsmittel der Molmasse von 500 bis 10000 zugesetzt wurden, wobei sich die Gewichtsprozente auf den Festkörper der Bindemittel beziehen.

**4.** Verfahren nach Anspruch 3, dadurch gekennzeichnet, daß ein oder mehrere Polyester mit $\beta$-Hydroxyalkylestergruppen zugesetzt wurden, die so gewählt wurden, daß sie mit den im Elektrotauchlackbad enthaltenen Bindemitteln nur begrenzt mischbar sind.

**5.** Verwendung von einem oder mehreren (Meth)acrylcopolymeren mit einer Aminzahl von 15 bis 150 und einer OH-Zahl von 15 bis 450, zusammen mit einem oder mehreren Polyestern mit $\beta$-Hydroxyalkylestergruppen, mit einer Säurezahl von 0 bis 3 und einem Gewichtsmittel der Molmasse von 1000 bis 10000, und/oder zusammen mit einem oder mehreren Homo- oder Copolymeren eines oder mehrerer Alkylvinylether mit 1 bis 5 Kohlenstoffatomen im Alkylrest, mit einem Gewichtsmittel der Molmasse von 500 bis 10000, als Additive zur Oberflächenverbesserung in kathodisch abscheidbare Bindemittel enthaltenden wäßrigen Elektrotauchlackbädern.

**6.** Verwendung nach Anspruch 5, wobei die Massenteile der (Meth)acrylcopolymeren zu den Polyestern und die Massenanteile der (Meth)acrylcopolymeren zu den Homo- oder Copolymeren von Alkylvinylethern jeweils im Verhältnis 1:10 bis 10:1, jeweils bezogen auf den Harzfestkörper, und im Falle der Kombination von (Meth)acrylcopolymeren mit Polyestern und Homo- oder Copolymeren von Alkylvinylethern jeweils im Verhältnis 1:1:10 bis 1:10:1 bzw. 10:1:1, jeweils bezogen auf den Harzfestkörper, zueinander stehen.

**7.** Verwendung nach Anspruch 5 oder 6 als Antikratermittel.

Europäisches Patentamt

# EUROPÄISCHER RECHERCHENBERICHT

Nummer der Anmeldung

EP 92120885.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| P,Y | EP - A - 0 461 566 (HERBERTS GESELLSCHAFT MIT BESCHRÄNKTER HAFTUNG) * Ansprüche * -- | 1,3, 5-7 | C 25 D 13/10<br>C 09 D 5/44<br>C 09 D 7/06 |
| Y | EP - A - 0 443 605 (E.I. DU PONT DE NEMOURS AND COMPANY) * Ansprüche * -- | 1,3, 5-7 | |
| D,Y | EP - A - 0 301 293 (BASF LACKE UND FARBEN AKTIENGESELLSCHAFT) * Ansprüche * -- | 1,3, 5-7 | |
| D,Y | EP - A - 0 422 533 (VIANOVA KUNSTHARZ AKTIENGESELLSCHAFT) * Ansprüche * ---- | 1,3, 5-7 | |

RECHERCHIERTE SACHGEBIETE (Int. Cl.⁵)

C 25 D 13/00
C 09 D 5/00
C 09 D 7/00

Der vorliegende Recherchenbericht wurde für alle Patentansprüche erstellt.

| Recherchenort | Abschlußdatum der Recherche | Prüfer |
|---|---|---|
| WIEN | 22-02-1993 | PAMMINGER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument